# EUROPÄISCHE PATENTSCHRIFT

(11) **EP 2 591 253 B1**
(45) Veröffentlichungstag und Bekanntmachung des Hinweises auf die Patenterteilung: **03.12.2014**
(21) Anmeldenummer: 11720302.6
(22) Anmeldetag: 19.05.2011
(51) Int. Cl.: F16H 63/32

(54) **SCHALTGABEL UND HERSTELLUNGSVERFAHREN DAFÜR**
SHIFT FORK AND METHOD FOR PRODUCING SAID SHIFT FORK
FOURCHETTE DE SÉLECTION ET PROCÉDÉ DE PRODUCTION DE LADITE FOURCHETTE

(30) Priorität: 07.07.2010 DE 102010026365
(43) Veröffentlichungstag der Anmeldung: 15.05.2013
(73) Patentinhaber: Schaeffler Technologies GmbH & Co. KG, 91074 Herzogenaurach (DE)
(72) Erfinder: SCHWARZ, Uwe, 91052 Erlangen (DE); FEUERBACH, Matthias, 97070 Würzburg (DE)
(86) Internationale Anmeldenummer: PCT/EP2011/058206
(87) Internationale Veröffentlichungsnummer: WO 2012/004041

(56) Entgegenhaltungen:
- EP-A1- 1 686 294
- JP-U- 59 118 021
- US-A- 3 257 861

## Beschreibung

### Gebiet der Erfindung

Die Erfindung betrifft eine Schaltgabel, welche einen gabelförmigen Grundkörper mit einander gegenüberliegenden Gabelschenkeln, die ein Schaltmaul zur Führung einer Schaltmuffe bilden, und ein einteiliges, separat hergestelltes Gleitelement für den Kontakt mit der Schaltmuffe aufweist, wobei das Gleitelement in einer Querschnittsebene der Schaltgabel asymmetrische Gleitschenkel aufweist, sowie eine nach diesem Verfahren hergestellte Schaltgabel.

### Hintergrund der Erfindung

Aus dem Stand der Technik sind Schaltgabeln bekannt, die zwischen zwei Gabelschenkeln ein Schaltmaul zum außenseitigen Eingriff in eine Schaltmuffe aufweisen. Die Schaltmuffe ist drehfest mit einem auf einer Getriebewelle angeordneten Synchronkörper verbunden, so dass diese zur zum Getriebegehäuse ortsfesten Schaltgabel rotiert. Um eine Überlastung der Schaltgabel beim Schaltvorgang zu vermeiden, sind die Schaltgabeln in der Regel endseitig an ihren Gabelschenkeln mit separat gefertigten Gleitschuhen versehen. Die Gleitschuhe können angespritzt oder aufgesteckt werden. Dazu müssen sie gerichtet und dauerhaft mit der Schaltgabel - häufig durch aufwändiges Schweißenverbunden werden.

Zur Lösung dieses Problems offenbart DE 71 05 111 U1 eine Schaltgabel mit einem U-förmigen Kunststoffprofil, das durch Sicken auf den metallischen Grundkörper der Schaltgabel festgelegt ist. Das Kunststoffprofil in Form eines einteiligen Halbrings reduziert die Montagekosten gegenüber zwei separaten Gleitschuhen. Eine weitere Befestigungsart eines derartigen Gleitschuhrings zeigt EP 1 686 294 B1, wonach der Gleitschuhring aufgrund seiner Biegesteifigkeit an die Innenseite der Schaltgabel drückt. Um ein Ablösen des Gleitschuhrings zu verhindern ist alternativ in US 4 630 719 B1 ein Verschrauben durch Bolzen vorgesehen.

Die vorgenannten Gleitschuhringe erfordern spezielle Materialeigenschaften, um diese sicher zu befestigen. Sie erfordern zudem relativ viel Gleitmaterial und sind nicht belastungsoptimiert.

JP 59-118021 U stellt den nächtstliegenden Stand der Technik gegenüber den Ansprüchen 1 und 5 dar.

### Zusammenfassung der Erfindung

Der Erfindung liegt die Aufgabe zugrunde, eine Schaltgabel zu schaffen, die besonders einfach herstellbar ist und deren Gleitschicht sicher an dem Grundkörper gehalten ist.

Diese Aufgabe wird durch eine Schaltgabel nach Anspruch 1 bzw. das Verfahren zu ihrer Herstellung nach Anspruch 5 gelöst. Der Erfindung liegt die Idee zugrunde, dass die Schaltmuffe stets nur in eine Richtung rotiert und aufgrund dieser Tatsache das Abstützverhalten eines an einem Schaltgabelgrundkörper gehaltenen Gleitelements richtungsorientiert ist. Der Materialeinsatz für das Gleitelement kann unter Beibehaltung eines sicheren Halts am Grundkörper minimiert werden, indem das Gleitelement asymmetrisch gestaltet wird. In einer Ausgestaltung der Erfindung weist ebenfalls der Grundkörper asymmetrische Gabelschenkel auf.

Das Gleitelement ist im Querschnitt vorzugsweise komplementär zum durch den Grundkörper vorgegebenen Schaltmaul ausgebildet und stützt sich mit seinem ersten Ende am Boden des ersten Gabelendes ab, während der Boden des zweiten Gabelendes nicht vom Gleitelement abgedeckt ist. In einer Variante stützt sich das zweite Gabelende am Grundkörper in einer nach radial außen weisenden Vertiefung bzw. einem radial nach außen weisenden Vorsprung ab.

Eine Ausgestaltung der Erfindung sieht vor, dass die Sicherung des Gleitelements nur für den unbelasteten Zustand ausgelegt werden braucht, wenn es sich beim Schalten am Grundkörper so abstützen kann, dass es verdrehsicher gehalten ist. Dadurch kann die Sicherung als reine Transportsicherung ausgelegt werden; ein vollflächiges Verkleben oder mehrere Vorsprünge zum Halten des Gleitelements sind nicht erforderlich. In der einfachsten Variante ist das Gleitelement komplementär zur Schaltmaulform ausgebildet und weist an dem der Haltnase gegenüberliegenden Schenkel einen Winkel bzw. einen Gleitschuh auf, der sich an dem radial gerichteten Ende des Grundkörpergabelschenkels abstützt.

In einer geeigneten Ausbildung der Erfindung ist das Gleitelement halbkreisförmig ausgebildet und weist an beiden Enden je einen Gleitschuh auf. Dabei ist der eine Gleitschuh mit einer Haltevorrichtung beispielsweise in Form einer Nase oder eines zylindrischen Stegs versehen und greift in eine entsprechende, vorzugsweise nach radial außen weisenden Ausnehmung des Grundkörpers ein. Beim Zusammenbau der Schaltgabel ist das Gleitelement über um die Haltevorrichtung drehbar. Der andere Gleitschuh weist einen Boden auf, mit dem er sich am Gabelschenkel in Umfangsrichtung abstützen kann.

Um die auf den sich abstützenden Gleitschuh wirkenden Kräfte zu verringern, kann sich das Gleitelement zusätzlich über einen oder mehrere Bereiche am Grundkörper abstützen. Diese können als weitere Gleitschuhe ausgestaltet sein oder aber als Bereiche, über die das Gleitelement form-, oder reibschlüssig mit dem Grundkörper verbunden ist.

In einer Variante der Erfindung ist der axiale Raumbedarf des Grundkörpers an den Stellen, an denen die Gleitschuhe bzw. Abstützbereiche des Gleitelements vorgesehen sind, verringert. Dadurch baut die Schaltgabel insgesamt axial schmaler.

In einer weiteren Variante der Erfindung ist das halbringförmige Gleitelement über einen großen Teilbereich flach ausgebildet und weist lediglich vereinzelt eine dreidimensionale, im Längsschnitt vorzugsweise U-förmige Struktur auf. Diese Variante eignet sich besonders in Kombination mit dem zuvor beschriebenen, im Durchmesser verringerten Schaltgabelgrundkörper, um axialen Bauraum zu sparen.

Die erfindungsgemäße Schaltgabel lässt sich auf besonders einfache Weise gemäß Anspruch 5 herstellen. Die beiden Bauteile Grundkörper und Gleitelement werden separat hergestellt. Sie werden dadurch miteinander verbunden, dass das Gleitelement am Grundkörper an einem Anlenkpunkt bzw. einer Anlenklinie eingehängt wird und um diese verschwenkt wird. Der Anlenkpunkt stellt erfindungsgemäß den Drehpunkt dar, um den das Gleitelement verdreht wird. Im fertig montierten Zustand kann der Anlenkpunkt zudem eine Verliersicherung darstellen, die ggf. mit einer weiteren Sicherung das Herausfallen des Gleitelements verhindert.

Eine derartig hergestellte Schaltgabel kann besonders kostengünstig hergestellt werden, wenn der Grundkörper als ein Blechumformteil hergestellt wird. In der einfachsten Variante ist das Blechteil durch einen einfachen Stanzprozess gefertigt.

Beim Blechumformen des Grundkörpers wird gleichzeitig der definierte Anlenkpunkt festgelegt. In einer Variante der Erfindung ist dazu ein Schaltgabelschenkel mit einer radial nach außen weisenden Nut versehen. Das Gleitelement weist vorzugsweise eine Haltenase als Drehelement auf, über den es in den Grundkörper eingehängt und verdreht wird.

Als Material für das Gleitelement kann prinzipiell jeder geeignete Werkstoff verwendet werden.

Die Sicherung des Gleitelements an dem Grundkörper kann auf mehrere Weisen erfolgen. In einer Variante wird das Gleitelement im Laufe des Verschwenkens auf den Grundkörper an zumindest einem, vom Drehpunkt möglichst beabstandeten Ort aufgeweitet. Das Aufweiten kann beispielsweise bei einem im Querschnitt U-förmigen Gleitelement irreversibel ausgestaltet sein, so dass es durch die Verformung sicher an dem Grundkörper gehalten wird. In einer anderen Variante wird das Gleitelement elastisch beim Verschwenken zunächst aufgeweitet, um in seiner Endstellung hinter einem Vorsprung am Grundkörper wieder in seine Ursprungsform zurückzufedern. Alternativ oder zusätzlich verschnappt der weiter verschwenkte endseitige Gleitschuh an einem Vorsprung des Grundkörpers.

Durch die einteilige Ausbildung des Gleitelements in Verbindung mit konstruktiven Mitteln zur Verdrehsicherung kann ein aufwändiges stoffschlüssiges Verbinden des Gleitelements entfallen, da ein Ablösen des Gleitelements vom tragenden Schaltgabelgrundkörper im Betrieb verhindert ist.

### Kurze Beschreibung der Zeichnungen

Die Erfindung wird nachfolgend anhand von Ausführungsbeispielen erläutert. Es zeigen:
- Figur 1: eine perspektivische Darstellung einer Schalteinheit mit einer Schaltstange und einer erfindungsgemäßen Schaltgabel,
- Figur 2: eine perspektivische Darstellung der beiden Ausgangswerkstücke Grundkörper und Gleitelement aus Figur 1 vor ihrem Zusammenbau,
- Figur 3: eine perspektivische Darstellung der Elemente aus Figur 2 in einer Querschnittsebene des Grundkörpers nach dem Einhängen des Gleitelements in den Grundkörper,
- Figur 4: eine perspektivische Darstellung der Elemente aus Figur 3 in der Querschnittsebene nach Figur 3 nach Fixieren des Gleitelements am Grundkörper,
- Figur 5: einen Längsschnitt der Schalteinheit nach Figur 1.

### Detaillierte Beschreibung der Zeichnungen

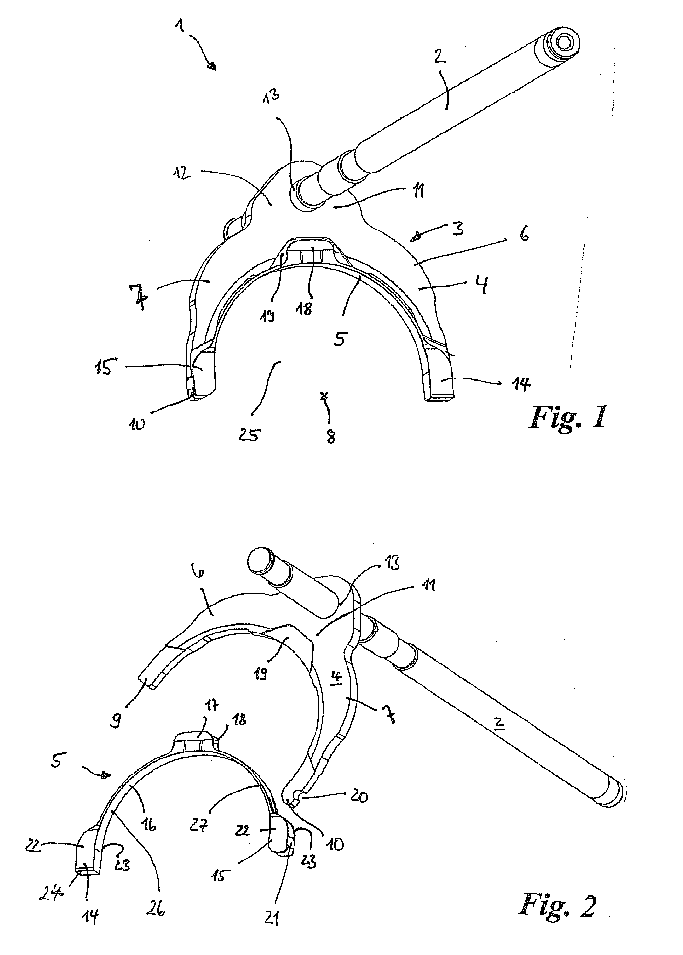

Figur 1 zeigt eine Schalteinheit 1 mit einer zumindest axial zu einer nicht dargestellten Getriebewelle bewegbaren Schaltstange 2 und einer Schaltgabel 3. Die Schaltgabel 3 ist fest mit der Schaltstange 2 verbunden, so dass von einem Bediener oder einer Aktuatorik ausgelöste Bewegungen der Schaltstange 2 die Schaltgabel 3 axial verschieben, um mittels einer nicht dargestellten Schaltmuffe einen Gang ein- bzw. auszulegen. Die Schaltgabel 3 weist einen Grundkörper 4 und ein Gleitelement 5 auf. Der Grundkörper 4 ist als etwa halbkreisförmiges Stanzteil aus Stahlblech ausgebildet und weist zwei Gabelschenkel 6, 7 auf, deren Enden 9, 10 sich bezüglich der Getriebeachse 8 gegenüber liegen, also etwa 180° versetzt zueinander angeordnet sind. Die Gabelschenkel 6, 7 sind im Querschnitt (zur Getriebeachse 8) gesehen zu ihren Enden 9, 10 relativ schmal und verbreitern sich in der Basis 11, in der sie ineinander übergehen. Die Anbindung der Schaltstange 2 erfolgt ebenfalls im Bereich der Basis 11. Hierzu weist der Grundkörper 4 einen radialen Wulst 12 mit einer Schaltstangendurchführung 13 auf.

Der Grundkörper 4 ist radial innenseitig mit dem Gleitelement 5 verbunden. Das Gleitelement 5 ist ein Kunststoffformteil, dessen radial nach außen gerichtete Kontur komplementär zur Innenkontur des Grundkörpers 4 ist. Damit liegt es über den gesamten Bereich der Schaltgabel am Grundkörper 4 innenseitig an. Endseitig weist das Gleitelement 5 Gleitschuhe 14, 15 auf, die stirnseitig in Bezug auf den Grundkörper 4 axial leicht hervorstehen. Die beiden unterschiedlich gestalteten Gleitschuhe 14, 15 sind über einen im Wesentlichen flachen, bandförmig gebogenen Halbring 16 miteinander verbunden, der in seiner Mitte zwei radial nach außen gerichtete Laschen 17, 18 zur Anbindung an die Basis 11 des Grundkörpers 4 aufweist. Der zweite Gleitschuh 15 unterscheidet sich vom ersten Gleitschuh 14 dadurch, dass er ein Halteelement 21 in Form eines Zylinders mit halbkreisförmigem Querschnitt aufweist, der die zwei axial gerichteten Gleitschuhwandungen 22, 23 miteinander verbindet. Weiterhin weist er keinen zu den Gleitschuhwandungen 22, 23 senkrecht gerichteten Boden 24 zum Abstützen am Grundkörper 4 auf.

Wie aus Figur 2 ersichtlich ist, ist die Dicke der Gabelschenkel 6, 7 an den Schenkelenden 8, 9 reduziert. Dadurch ergibt sich der erforderliche axiale Bauraum für die Schaltgabel 3 nicht als Summe der Blechdicke des Grundkörpers 4 und der Dicke des Gleitelements 5, sondern ist gegenüber dieser Summe verringert. Ferner weist der Grundkörper 4 an der Basis 11 einen in der Blechdicke reduzierten Bereich 19 auf, der an dieser Stelle die durch die Schaltgabel 3 übertragbaren Kräfte kaum vermindert. Er ist halbmondförmig ausgestaltet und stellt eine Transportsicherung dar, da er im Zusammenwirken mit den Laschen 17, 18 das Gleitelement 5 am Herausschwenken hindert.

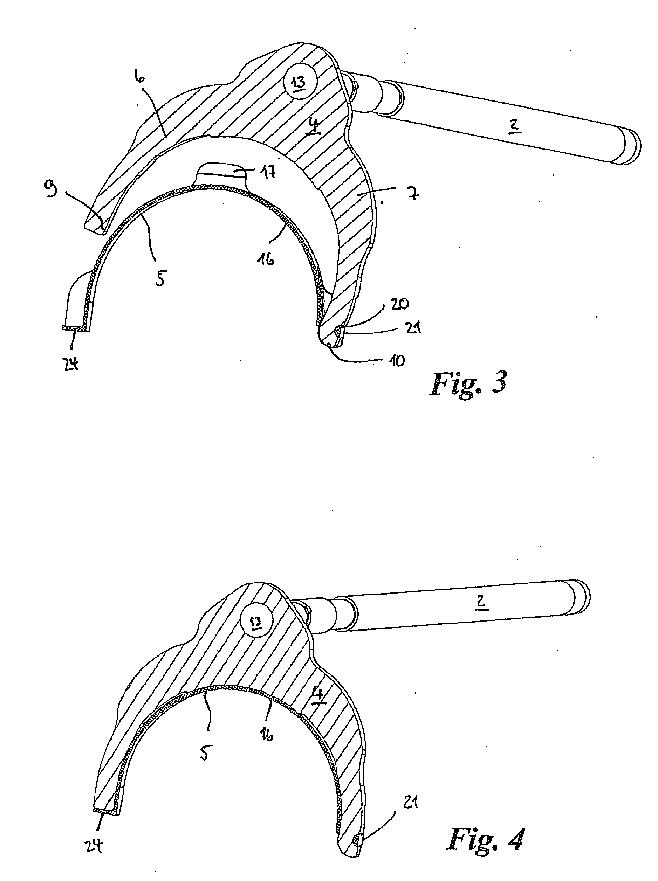

Weiterhin weist der Grundkörper 4 an seinem zweiten Gabelschenkel 7 an seiner radial äußeren Seite eine Nut 20 auf, welche als Anlenkpunkt für das Halteelement 21 des Gleitelements 5 dient (Figur 3). Der erste Gabelschenkel 6 weist keine derartige Nut auf.

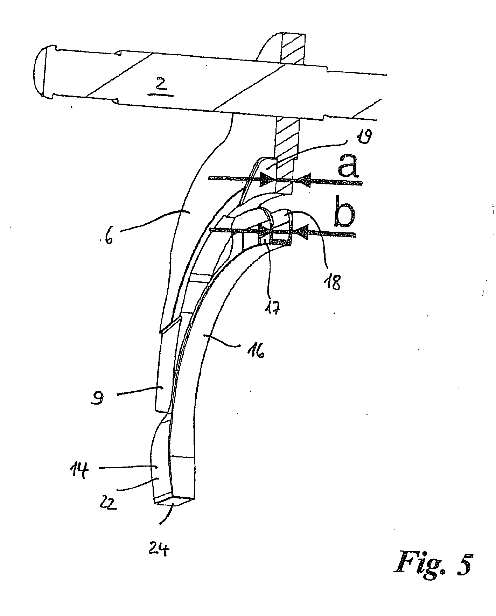

Der Zusammenbau der Schaltgabel 3 erfolgt gemäß den Darstellungen der Figuren 2, 3 und 4. Der Grundkörper 4 aus Blech ist spanlos aus Stahl- oder Aluminiumblech durch Stanzen, Tiefziehen oder andere Kaltumformungstechniken hergestellt. Das Gleitelement 5 ist separat vom Grundkörper 4 gefertigt. Beim Zusammenbau zur Schaltgabel 3 wird das Gleitelement 5 mit seinem Halteelement 21 in die als Anlenkung dienende Nut 20 eingehängt (Figur 3). Danach wird das Gleitelement 5 um das Halteelement 21 in der Nut 20 verschwenkt, bis die Laschen 17, 18 am Grundkörper 4 anliegen. Die Laschen 17, 18 weisen ein kleineres Öffnungsmaß b als die Blechdicke a des reduzierten Bereichs auf, so dass beim weiteren Verschwenken in die in Figur 4 dargestellte Endposition die Laschen 17, 18 aufgeweitet werden (Figur 5). Sie sind somit reibschlüssig verbunden. In dieser Endposition liegt der Boden 24 des ersten Gleitschuhs 14 am Grundkörper 4 an. Bei der nun fertig montierten Schaltgabel 3 ist das Gleitelement 5 hinreichend sicher für den Transport und die weitere Montage am Grundkörper 4 gehalten.

Bei der Getriebemontage ist die Schaltgabel 3 so in das Getriebe einzusetzen, dass sich die Schaltmuffe in Richtung vom ersten Gleitschuh 14 über den Bereich des Halbrings 16 zum zweiten Gleitschuh 15 dreht, damit sich der Boden 24 und damit das Gleitelement 5 mit Hilfe der Reibkräfte stets am Grundkörper 4 abstützen kann. Eine weitere Abstützung erfolgt in der Nut 20 durch das Halteelement 21 sowie ggf. im Bereich der Laschen 17, 18. Somit ist das Gleitelement 5 auch unter Last sicher an dem Grundkörper 4 gehalten.

### Bezugszahlen

- 1: Schalteinheit
- 2: Schaltstange
- 3: Schaltgabel
- 4: Grundkörper
- 5: Gleitelement
- 6: erster Gabelschenkel
- 7: zweiter Gabelschenkel
- 8: Getriebeachse
- 9: erstes Schenkelende
- 10: zweites Schenkelende
- 11: Basis
- 12: Wulst
- 13: Schaltstangendurchführung
- 14: erster Gleitschuh
- 15: zweiter Gleitschuh
- 16: Halbring
- 17: Lasche
- 18: Lasche
- 19: reduzierter Bereich
- 20: Nut
- 21: Halteelement
- 22: Gleitschuhwandung
- 23: Gleitschuhwandung
- 24: Boden
- 25: Schaltmaul
- 26: erster Gleitschenkel
- 27: zweiter Gleitschenkel

- a: Blechdicke
- b: Öffnungsmaß

## Patentansprüche

1. Schaltgabel (3), welche einen gabelförmigen Grundkörper (4) mit einander gegenüberliegenden Gabelschenkeln (6, 7), die ein Schaltmaul (25) zur Führung einer Schaltmuffe bilden, und ein einteiliges, separat hergestelltes Gleitelement (5) für den Kontakt mit der Schaltmuffe aufweist, wobei das Gleitelement (5) in einer Querschnittsebene der Schaltgabel (3) asymmetrische Gleitschenkel (26, 27) aufweist, **dadurch gekennzeichnet, dass** das Gleitelement (5) zwei gegenüberliegende Gleitschuhe (14, 15) aufweist und sich mit einem Gleitschuh (14) am Ende eines Gabelschenkels in Umfangsrichtung abstützt und mit dem anderen Gleitschuh (15) in einer nach außen gerichteten Haltevorrichtung (20) des Grundkörpers (4) abstützt.

2. Schaltgabel (3) nach Anspruch 1, **dadurch gekennzeichnet, dass** die Gabelschenkel (6, 7) in der Querschnittsebene der Schaltgabel (3) asymmetrisch sind.

3. Schaltgabel (3) nach Anspruch 1, **dadurch gekennzeichnet, dass** die Gleitschuhe (14, 15) im Querschnitt U-förmig ausgebildet sind, wobei zumindest Teile (16) von die Gleitschuhe (14, 15) verbindenden Bereichen des Gleitelements (5) flach ausgebildet sind.

4. Schaltgabel (3) nach Anspruch 1, **dadurch gekennzeichnet, dass** die Gabelschenkelenden (9, 10) eine geringere axiale Ausdehnung aufweisen als der Grundkörper (4) im Bereich (11) einer Schaltstangenanbindung (13).

5. Verfahren zur Herstellung von Schaltgabeln (3) nach einem der Ansprüche 1-4, wobei das separat vom Grundkörper (4) hergestellte Gleitelement (5) an einem Anlenkpunkt des Grundkörpers (4) eingehängt und dann um den Anlenkpunkt in seine Endposition verschwenkt wird.

6. Verfahren nach Anspruch 5, **dadurch gekennzeichnet, dass** nach dem Verschwenken das Gleitelement (5) kraft-, oder formschlüssig gesichert wird.

7. Verfahren nach Anspruch 6, **dadurch gekennzeichnet, dass** das im Querschnitt zumindest teilweise U-förmig ausgebildete Gleitelement (5) beim Einschwenken auf den Grundkörper (4) elastisch aufgeweitet wird.

8. Verfahren nach Anspruch 6 oder 7, **dadurch gekennzeichnet, dass** das Gleitelement (5) an dem Grundkörper (4) verschnappt.

9. Verfahren nach Anspruch 6, **dadurch gekennzeichnet, dass** das im Querschnitt zumindest teilweise U-förmig ausgebildete und ein kleineres Öffnungsmaß (b) als die Blechdicke (a) des Grundkörpers (4) aufweisende Gleitelement (5) beim Einschwenken reibschlüssig mit dem Grundkörper (4) verbunden wird.

## Claims

1. Selector fork (3) which has a fork-shaped main body (4), with fork limbs (6, 7) which lie opposite one another and form a shifting mouth (25) for guiding a selector sleeve, and a single-piece, separately produced sliding element (5) for contact with the selector sleeve, the sliding element (5) having asymmetrical sliding limbs (26, 27) in a cross-sectional plane of the selector fork (3), **characterized in that** the sliding element (5) has two sliding pads (14, 15) which lie opposite one another and is supported in the circumferential direction by way of one sliding pad (14) at the end of a fork limb and is supported by way of the other sliding pad (15) in an outwardly directed holding apparatus (20) of the main body (4).

2. Selector fork (3) according to Claim 1, **characterized in that** the fork limbs (6, 7) are asymmetrical in the cross-sectional plane of the selector fork (3).

3. Selector fork (3) according to Claim 1, **characterized in that** the sliding pads (14, 15) are of U-shaped configuration in cross section, at least parts (16) of regions of the sliding element (5) which connect the sliding pads (14, 15) being of flat configuration.

4. Selector fork (3) according to Claim 1, **characterized in that** the fork limb ends (9, 10) have a smaller axial extent than the main body (4) in the region (11) of a selector rod attachment (13).

5. Method for producing selector forks (3) according to one of Claims 1 to 4, the sliding element (5) which is produced separately from the main body (4) being mounted at an articulation point of the main body (4) and then being pivoted about the articulation point into its end position.

6. Method according to Claim 5, **characterized in that**, after the pivoting, the sliding element (5) is secured in a non-positive or positively locking manner.

7. Method according to Claim 6, **characterized in that** the sliding element (5) which is of at least partially U-shaped configuration in cross section is widened elastically onto the main body (4) during pivoting in.

8. Method according to Claim 6 or 7, **characterized in that** the sliding element (5) snaps onto the main body (4).

9. Method according to Claim 6, **characterized in that** the sliding element (5) which is of at least partially U-shaped configuration in cross section and has a smaller opening dimension (b) than the sheet metal thickness (a) of the main body (4) is connected in a frictionally locking manner to the main body (4) during pivoting in.

## Revendications

1. Fourchette de sélection (3), comportant un corps de base (4) en forme de fourchette avec des branches de fourchette (6, 7) opposées l'une par rapport à l'autre formant une gueule de sélection (25) permettant de guider un manchon de connexion et un élément glissant (5) réalisé d'un seul tenant fabriqué de façon séparée pour établir le contact avec le manchon de connexion, l'élément glissant (5) comportant des branches coulissantes (26, 27) asymétriques dans un plan de section transversale de la fourchette de sélection (3), **caractérisée en ce que** l'élément glissant (5) comporte deux patins de glissement (14, 15) opposés et s'appuie avec un patin de glissement (14) contre l'extrémité d'une branche de fourchette, dans la direction circonférentielle, et appuie avec l'autre patin de glissement (15) dans un dispositif d'arrêt (20) orienté vers l'extérieur du corps de base (4).

2. Fourchette de sélection (3) selon la revendication 1, **caractérisée en ce que** les branches de fourchette de sélection (6, 7) sont asymétriques dans le plan de section transversale de la fourchette de sélection (3).

3. Fourchette de sélection (3) selon la revendication 1, **caractérisée en ce que** les patins de glissement (14, 15) prennent une forme de U en section transversale, au moins des parties (16) des zones de l'élément glissant (5) reliant les patins de glissement (14, 15) prenant une forme plate.

4. Fourchette de sélection (3) selon la revendication 1, **caractérisée en ce que** les extrémités de branche de fourchette (9, 10) présentent une largeur axiale plus réduite que le corps de base (4) dans la zone (11) d'une jonction de tringle de sélection (13).

5. Procédé de production de fourchettes de sélection (3) selon l'une quelconque des revendications 1 à 4, l'élément glissant (5) fabriqué de façon séparée du corps de base (4) étant accroché à un point de jonction du corps de base (4) puis pivoté dans sa position terminale autour du point de jonction.

6. Procédé selon la revendication 5, **caractérisé en ce qu'**après le pivotement, l'élément glissant (5) est fixé par complémentarité de forces ou de formes.

7. Procédé selon la revendication 6, **caractérisé en ce que** l'élément glissant (5) prenant au moins en partie une forme de U en section transversale est élargi de façon élastique sur le corps de base (4) lors du pivotement vers l'intérieur.

8. Procédé selon la revendication 6 ou 7, **caractérisé en ce que** l'élément glissant (5) est clipsé au niveau du corps de base (4).

9. Procédé selon la revendication 6, **caractérisé en ce que** l'élément glissant (5) prenant au moins en partie une forme de U en section transversale et présentant un degré d'ouverture (b) inférieur à l'épaisseur de tôle (a) du corps de base (4) est relié par complémentarité de frottements au corps de base (4) lors du pivotement vers l'intérieur.
